# EUROPÄISCHE PATENTSCHRIFT

(11) **EP 3 219 561 B1**
(45) Veröffentlichungstag und Bekanntmachung des Hinweises auf die Patenterteilung: **22.05.2019**
(21) Anmeldenummer: 17152362.4
(22) Anmeldetag: 20.01.2017
(51) Int. Cl.: B60T 10/02

(54) **BETRIEBSVERFAHREN UND STEUERVORRICHTUNG FÜR EIN DAUERBREMSSYSTEM EINES FAHRZEUGS**
OPERATING METHOD AND CONTROL DEVICE FOR A LONG-TERM BRAKING SYSTEM OF A VEHICLE
PROCÉDÉ DE FONCTIONNEMENT ET DISPOSITIF DE COMMANDE D'UN SYSTÈME DE FREINAGE CONTINU D'UN VÉHICULE AUTOMOBILE

(30) Priorität: 18.02.2016 DE 102016001933
(43) Veröffentlichungstag der Anmeldung: 20.09.2017
(73) Patentinhaber: MAN Truck & Bus AG, 80995 München (DE)
(72) Erfinder: Palm, Rüdiger, 81541 München (DE)
(74) Vertreter: v. Bezold & Partner Patentanwälte - PartG mbB

(56) Entgegenhaltungen:
- EP-A1- 2 123 500
- EP-A1- 3 153 372
- WO-A1-2007/139489

## Beschreibung

Die Erfindung betrifft ein Betriebsverfahren für ein Dauerbremssystem eines Kraftfahrzeugs, wobei das Dauerbremssystem eine primäre Dauerbremse und eine sekundäre Dauerbremse aufweist (siehe z.B. Dokument EP 3 153 372). Die Erfindung betrifft insbesondere ein Verfahren zur Aufteilung einer Dauerbremsen-Bremsanforderung in einen ersten Anteil, der von der primären Dauerbremse angefordert wird, und in einen zweiten Anteil, der von der sekundären Dauerbremse angefordert wird. Die Erfindung betrifft ferner eine Steuervorrichtung zur Durchführung des Verfahrens. Aus dem Stand der Technik sind Dauerbremssysteme für Kraftfahrzeuge bekannt. Eine Dauerbremse ist eine Einrichtung, die länger andauerndes und auch verschleißfreies Bremsen ermöglicht, ohne in ihrer Bremsleistung nachzulassen. Die verschiedenen Dauerbremsen werden in primäre und sekundäre Dauerbremsen unterteilt. Eine primäre Dauerbremse ist üblicherweise motorseitig im Kraftfluss vor dem Getriebe angeordnet. Primäre Dauerbremsen wirken üblicherweise über die Kurbelwelle des Motors und sind daher drehzahlabhängig. Beispiele für primäre Dauerbremsen sind Motorbremsen, z. B. als Auspuffklappenbremsen, als ventilgesteuerte Dauerbremsen und/oder als Turbosysteme oder sogenannte Primärretarder. Sekundäre Dauerbremsen sind im Kraftfluss hinter dem Getriebe angeordnet, beispielsweise an der Kardanwelle, und umfassen beispielsweise hydraulisch wirkende Retarder oder Wirbelstrombremsen. Sekundäre Dauerbremsen sind oftmals geschwindigkeitsabhängig. Zu den sekundären Dauerbremsen zählen die Sekundärretarder, insbesondere in Form einer hydrodynamischen Strömungsbremse oder einer elektromagnetischen Wirbelstrombremse.

Bei aus der Praxis bekannten Dauerbremsen kann oftmals nur zwischen einem eingeschalteten und einem ausgeschalteten Zustand gewählt werden, wobei die erzeugte Bremsleistung nicht regelbar ist. Dies hat den Nachteil, dass das erzeugte Dauerbremsmoment nicht optimal auf das aktuell benötigte Dauerbremsmoment angepasst werden kann. Bekannte Betriebsverfahren für Dauerbremssysteme weisen ferner nachteilige Eigenschaften in Bezug auf den beim Dauerbremsvorgang erzeugten Wärmeeintrag in das Motorkühlsystem und in Bezug auf die Geräuschentwicklung auf.

In der noch unveröffentlichten deutschen Patentanmeldung DE 10 2015 012 735 ist ein Betriebserfahren für ein Dauerbremssystem mit einer primären und einer sekundären Dauerbremse bekannt, wobei die primäre Dauerbremse eine erste primäre Dauerbremseinrichtung zur Erzeugung eines einstellbaren ersten Bremsmomentanteils und eine zweite primäre Dauerbremseinrichtung zur Erzeugung eines einstellbaren zweiten Bremsmomentanteils aufweist, wobei die erste im Vergleich zur zweiten primären Dauerbremseinrichtung ein schnelleres Ansprechverhalten aufweist. Dieses Verfahren bietet den Nachteil, dass es für ein Dauerbremssystem, bei dem die erste Dauerbremse keine zwei unterschiedlich schnellen Anteile aufweist, nicht geeignet ist.

Es ist somit eine Aufgabe der Erfindung, ein Betriebsverfahren für ein Dauerbremssystem, aufweisend eine primäre Dauerbremse und eine sekundäre Dauerbremse, bereitzustellen, mit dem Nachteile herkömmlicher Techniken vermieden werden können. Die Aufgabe der Erfindung ist es insbesondere, ein Betriebsverfahren bereitzustellen, mit dem eine Reaktionszeit des Dauerbremssystems verbessert und/oder der Wärmeeintrag des Dauerbremssystems und die erzeugte Geräuschentwicklung möglichst gering gehalten werden. Eine weitere Aufgabe ist es, eine Vorrichtung zur verbesserten Aufteilung einer Dauerbremsen-Bremsanforderung in einen ersten Anteil, der von der primären Dauerbremse angefordert wird, und in einen zweiten Anteil, der von der sekundären Dauerbremse angefordert wird, bereitzustellen.

Diese Aufgaben werden durch Vorrichtungen und Betriebsverfahren mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Betriebsverfahren für ein Dauerbremssystem eines Kraftfahrzeugs bereitgestellt. Das Kraftfahrzeug kann ein Nutzfahrzeug sein. Das Dauerbremssystem umfasst dabei eine primäre Dauerbremse und eine sekundäre Dauerbremse, wobei sowohl die primäre Dauerbremse als auch die sekundäre Dauerbremse regelbar ausgeführt sind, so dass das von der primären und der sekundären Dauerbremse erzeugte Dauerbremsmoment jeweils variabel einstellbar ist.

Die Erfindung betrifft insbesondere ein Verfahren, nach Anspruch 1, zur Aufteilung einer Dauerbremsen-Bremsanforderung eines derartigen Dauerbremssystems, bei dem eine Dauerbremsen-Bremsanforderung in einen ersten Anteil, der von der primären Dauerbremse angefordert wird, und in einen zweiten Anteil, der von der sekundären Dauerbremse angefordert wird, aufgeteilt wird. Der erste Bremsmomentanteil und der zweite Bremsmomentanteil werden derart festgelegt, dass das Dauerbremssystem ein Bremsmoment in Höhe der Dauerbremsen-Bremsanforderung erzeugt. Das insgesamt von dem Dauerbremssystem erzeugbare bzw. erzeugte Bremsmoment ergibt sich somit durch die Summe der beiden Anteile.

Die Dauerbremsen-Bremsanforderung stellt eine Sollwertvorgabe dar, die die Höhe eines von dem Dauerbremssystem aufzubringenden Bremsmomentes angibt. Die Dauerbremsen-Bremsanforderung kann beispielsweise von einem Fahrzeuglängsregelsystem oder einer Geschwindigkeitsregelanlage erzeugt werden. Nachfolgend wird die Dauerbremsen-Bremsanforderung auch abgekürzt als Bremsanforderung bezeichnet.

Die sekundäre Dauerbremse kann ein Sekundärretarder sein, beispielsweise in Form einer hydrodynamischen Strömungsbremse oder einer elektromagnetischen Wirbelstrombremse. Die primäre Dauerbremse ist eine Motorstaubremse zum Aufbau eines Abgasgegendrucks. Eine Motorstaubremse kann beispielweise eine im Abgasstrang angeordnete und im Motorbremsbetrieb regelbare Motorstauklappe aufweisen, über die ein Abgasgegendruck erzeugbar und einstellbar ist. Zur Einstellung des ersten Bremsmomentanteils wird ein Anstellwinkel der Motorstauklappe eingestellt. Die primäre Dauerbremse bzw. die Motorbremse kann auch als Dekompressionsbremse ausgeführt sein. Die primäre Dauerbremse kann ferner auch als Kombination aus einer Motorstaubremse und einer Dekompressionsbremse ausgeführt sein (als sog. Exhaust Valve Brake bezeichnet). Eine solche Mischform aus einer Motorstaubremse und einer Dekompressionsbremse ist beispielsweise aus den Offenlegungsschriften EP 2 143 894 A1 und EP 2 143 896 A1 bekannt. Die primäre Dauerbremse kann auch ein Primärretarder sein.

Das erfindungsgemäße Verfahren zeichnet sich dadurch aus, dass in einem Zeitraum nach Aktivierung eines Dauerbremsbetriebs und bis eine Dauerbremsen-Bremsanforderung nach Aktivierung des Dauerbremsbetriebs einen ersten Schwellenwert erstmalig überschreitet, die Dauerbremsen-Bremsanforderung nur von der primären Dauerbremse aufgebracht wird, d. h., die Dauerbremsen-Bremsanforderung wird zu 100 % auf den ersten Anteil, der von der primären Dauerbremse angefordert, aufgeteilt. Der zweite Anteil, der von der sekundären Dauerbremse angefordert wird, ist null.

Der erste Schwellenwert ist so festgelegt, dass er einem Wert entspricht, der kleiner oder gleich einem maximal von der primären Dauerbremse erzeugbaren Bremsmoment ist. Besonders vorteilhaft ist, wenn der erste Schwellenwert auf einen Wert festgelegt ist, der dem maximal von der primären Dauerbremse erzeugbaren Dauerbremsmoment entspricht. Eine Aktivierung der sekundären Dauerbremse erfolgt erst nach erstmaligem Überschreiten des ersten Schwellenwertes durch die Dauerbremsanforderung.

Unter einer Aktivierung des Dauerbremsbetriebs wird ein Einschalten des Dauerbremssystems verstanden, d. h. der Übergang vom Nichtbremsbetrieb in den Bremsbetrieb des Dauerbremssystems und/oder der Beginn der Betriebsphase des Fahrzeugs, während derer ein Dauerbremsmoment größer null von dem Dauerbremssystem aufgebracht werden muss. Entsprechendes gilt jeweils für die Aktivierung bzw. das Einschalten der primären Dauerbremse und die Aktivierung bzw. das Einschalten der sekundären Dauerbremse. So wird unter einer Aktivierung oder einem Einschaltvorgang der sekundären Dauerbremse beispielsweise der Übergang vom Nichtbremsbetrieb in den Bremsbetrieb der sekundären Dauerbremse verstanden, beispielsweise der Zeitpunkt, an dem der zweite Anteil von einem Wert null auf einen Wert größer null gesetzt wird. Der erste Schwellenwert kann drehzahlabhängig sein und somit abhängig vom aktuellen Betriebszustand fortlaufend berechnet und vorgeben werden.

Zu Beginn einer Dauerbremsung wird somit die Dauerbremsen-Bremsanforderung komplett durch die primäre Dauerbremse bereitgestellt und zwar so lange, bis die Dauerbremsen-Bremsanforderung den ersten Schwellenwert überschreitet. Dieser Aspekt des Verfahrens macht sich die technische Erkenntnis zunutze, dass die primäre Dauerbremse in der Regel einen geringeren Wärmeeintrag in das Kühlsystem des Fahrzeugs als die sekundäre Dauerbremse erzeugt. So erfolgt beispielsweise im Falle einer Motorbremse als primärer Dauerbremse der Wärmeeintrag primär in den Abgasstrom und muss somit nicht vom Kühlsystem aufgefangen werden. Primäre Dauerbremsen, insbesondere in Form einer Motorstaubremse, können bei kleinen Geschwindigkeiten und großen Gang-Übersetzungen viel Bremsmoment liefern. Die sekundäre Dauerbremse stellt dagegen bei geringen Geschwindigkeiten wenig Bremsmoment zur Verfügung, so dass die Verwendung der primären Dauerbremse ferner den Vorteil bietet, dass bei Beginn einer Dauerbremsung unabhängig von der Fahrzeuggeschwindigkeit ein Bremsmoment bis zum ersten Schwellenwert erzeugbar ist. Ein weiterer Vorteil ist, dass bei Bremsanforderungen, die den ersten Schwellenwert nicht überschreiten, Einschaltvorgänge des Sekundärretarders vermieden werden können, da beim Einschalten des Sekundärretarders ein höherer Einschaltstoß als bei einem Primärretarder auftritt.

Gemäß einem weiteren Ausführungsbeispiel kann das Verfahren so ausgestaltet sein, dass bei einer nachfolgenden Verringerung der Dauerbremsen-Bremsanforderung, d. h. nachdem der erste Schwellenwert zumindest einmal überschritten wurde und die sekundäre Dauerbremse aktiviert wurde, ein von der sekundären Dauerbremse angeforderter Bremsanteil nicht auf null abgesenkt wird, solange die Dauerbremsen-Bremsanforderung größer null ist. Mit anderen Worten wird die sekundäre Dauerbremse, nachdem diese erstmals aktiviert wurde, nicht ganz auf null heruntergeregelt, solange das angeforderte Bremsmoment größer null ist. Dadurch können Ein- und Ausschaltvorgänge der sekundären Dauerbremse reduziert werden und damit die Anzahl unkomfortabler Einschaltstöße.

Gemäß einem weiteren Aspekt kann das Verfahren so ausgestaltet sein, dass der erste Anteil der Dauerbremsen-Bremsanforderung auf einen Wert des ersten Schwellenwerts und der zweite Anteil auf einen Wert der Differenz von Dauerbremsen-Bremsanforderung und erstem Schwellenwert festgelegt wird, wenn und solange die Dauerbremsen-Bremsanforderung größer gleich einem dritten Schwellenwert ist, der eine Summe aus dem ersten Schwellenwert und einem zweiten Schwellenwert ist. Dies bietet den Vorteil, dass Schwankungen der Dauerbremsen-Bremsanforderung durch die sekundäre Dauerbremse ausmoduliert bzw. ausgeregelt werden, während der Bremsmomentanteil, der von der primären Dauerbremse angefordert wird, konstant gehalten wird. Diese Variante macht sich die Tatsache zu Nutze, dass eine sekundäre Dauerbremse, insbesondere in Form eines Sekundärretarders, schnell und fein regelbar arbeitet.

Gemäß einer weiteren Variante kann das Verfahren so ausgestaltet sein, dass, wenn eine Dauerbremsen-Bremsanforderung von einem Wert oberhalb des dritten Schwellenwerts kommend diesen dritten Schwellenwert unterschreitet, der zweite Anteil dann auf einen konstanten Wert des zweiten Schwellenwerts und der erste Anteil auf die Differenz von Dauerbremsen-Bremsanforderung und zweitem Schwellenwert festgelegt wird, solange die Dauerbremsen-Bremsanforderung kleiner als der dritte Schwellenwert und größer gleich dem zweiten Schwellenwert ist. Bei dieser Variante wird somit der Bremsmomentanteil der sekundären Dauerbremse konstant auf einem kleinen Wert gehalten und Schwankungen der Bremsanforderung unterhalb des dritten Schwellenwerts von der primären Dauerbremse ausgeregelt, um auf diese Weise einen möglichst geringen Eintrag in das Motorkühlsystem zu erzeugen.

Gemäß einer weiteren Möglichkeit wird dann, wenn eine Dauerbremsen-Bremsanforderung nach einer Überschreitung des dritten Schwellenwerts anschließend wieder unter den zweiten Schwellenwert fällt, der ersten Anteil auf null (d. h., die primäre Dauerbremse wird deaktiviert) und der zweite Anteil auf die Dauerbremsen-Bremsanforderung festgelegt. Die sekundäre Dauerbremse wird somit nach der primären Dauerbremse ausgeschaltet.

Der zweite Schwellenwert kann auf einen kleinen Wert in Bezug auf das von der sekundären Dauerbremse maximal erzeugbare Bremsmoment festgelegt sein. Der zweite Schwellenwert kann auf einen Wert festgelegt sein, der kleiner gleich 20 % oder kleiner gleich 10 % des maximal von der sekundären Bremseinrichtung im aktuellen Betriebszustand erzeugbaren Bremsmoments ist. Der zweite Schwellenwert kann beispielsweise auf einen Wert festgelegt ist, der mindestens einem minimalen, von der sekundären Dauerbremse im aktivierten Zustand erzeugbaren Dauerbremsmoment entspricht. Beispielsweise weist jeder Sekundärretarder ein minimal erzeugbares Bremsmoment im aktivierten Zustand auf und ferner noch ein Bremsmoment, das üblicherweise als das "Mindestbremsmoment" gilt. Dieses "Mindestbremsmoment" liegt betragsmäßig höher als das minimal erzeugbare Moment. Ein Sekundärretarder ist üblicherweise ausgebildet, von null kommend nichts zu machen, bis dieses Mindestbremsmoment angefordert wird. Bei sinkender Bremsanforderung kann der Sekundärretarder jedoch unter dieses "Mindestbremsmoment" gehen. Der zweite Schwellenwert ist daher vorzugsweise auf einen Wert oberhalb dieser beiden Momente des Sekundärretarders festgelegt.

Gemäß einem weiteren Aspekt kann das Betriebsverfahren so ausgeführt sein, dass, wenn während eines Dauerbremsbetriebs die erste Dauerbremse oder die zweite Dauerbremse zumindest einen Teil ihres erzeugbaren Bremsmoments verliert, so dass das erzeugte Bremsmoment unter den von der jeweiligen Dauerbremse angeforderten Anteil des Dauerbremsmoments fällt, das weggefallene Bremsmoment durch die andere Dauerbremse substituiert wird. Dies bietet den Vorteil, dass auf eine Fehlfunktion einer der Dauerbremsen reagiert werden kann, indem die andere Dauerbremse kurzfristig das verlorene Bremsmoment der anderen Dauerbremse zusätzlich aufbringt.

Vorstehend wurde ebenfalls bereits erwähnt, dass die primäre Dauerbremse als eine Mischform bzw. Kombination einer Motorstaubremse zum Aufbau eines Abgasgegendrucks und einer Dekompressionsbremse gebildet sein kann. Vorzugsweise weist die primäre Dauerbremse keine weitere Bremseinrichtung auf, die im Vergleich zur der Motorstaubremse und/oder der Dekompressionsbremse ein langsameres Ansprechverhalten aufweist. Vorzugsweise weist die primäre Dauerbremse keine weitere Bremseinrichtung auf, die ausgebildet ist, zusätzlich zu der Motorstaubremse und/oder der Dekompressionsbremse ein Dauerbremsmoment über eine Veränderung eines Ladedrucks einer aufgeladenen Brennkraftmaschine zu erzeugen.

Gemäß einem zweiten Gesichtspunkt der Erfindung wird eine Vorrichtung, nach Anspruch 9, zur Steuerung oder Regelung eines Dauerbremssystems eines Kraftfahrzeugs bereitgestellt. Das Dauerbremssystem umfasst wiederum eine primäre Dauerbremse und eine sekundäre Dauerbremse, vorzugsweise in Form eines Sekundärretarders.

Die Vorrichtung ist ausgebildet, eine Dauerbremsen-Bremsanforderung in einen ersten Anteil, der von der primären Dauerbremse angefordert wird, und in einen zweiten Anteil, der von der sekundären Dauerbremse angefordert wird, aufzuteilen. Die Vorrichtung ist ferner ausgebildet, den ersten Anteil und den zweiten Anteil gemäß einem Betriebsverfahren einer der vorhergehenden Ansprüche festzulegen.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Festlegung des ersten und zweiten Anteils und bzgl. der Aktivierung der primären Dauerbremse und der sekundären Dauerbremse gelten somit auch für die erfindungsgemäße Vorrichtung. Beispielsweise ist die Vorrichtung somit ausgebildet, die ersten und zweiten Anteil so festzulegen, dass nach Aktivierung eines Dauerbremsbetriebs und bis eine Dauerbremsen-Bremsanforderung nach Aktivierung des Dauerbremsbetriebs einen ersten Schwellenwert erstmalig überschreitet, die Dauerbremsen-Bremsanforderung von der primären Dauerbremse aufgebracht wird, wobei der erste Schwellenwert so festgelegt ist, dass er einem Wert entspricht, der kleiner oder gleich einem maximal von der primären Dauerbremse erzeugbaren Bremsmoment ist. Ferner ist die Vorrichtung ausgebildet, die sekundäre Dauerbremse bei erstmaligem Überschreiten des ersten Schwellenwertes durch die Dauerbremsen-Bremsanforderung nach Aktivierung eines Dauerbremsbetriebs zu aktivieren.

Die Erfindung betrifft ferner ein Kraftfahrzeug, insbesondere ein Nutzfahrzeug, mit einem Dauerbremssystem und einer derartigen Vorrichtung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm einer Vorrichtung gemäß einer Ausführungsform der Erfindung;
- Figur 2: ein Zeitdiagram zur Illustration des Zusammenwirkens der primären und sekundären Dauerbremse gemäß einer Ausführungsform der Erfindung; und
- Figur 3: ein Zeitdiagram zur Illustration des Zusammenwirkens der primären und sekundären Dauerbremse gemäß einer weiteren Ausführungsform der Erfindung.

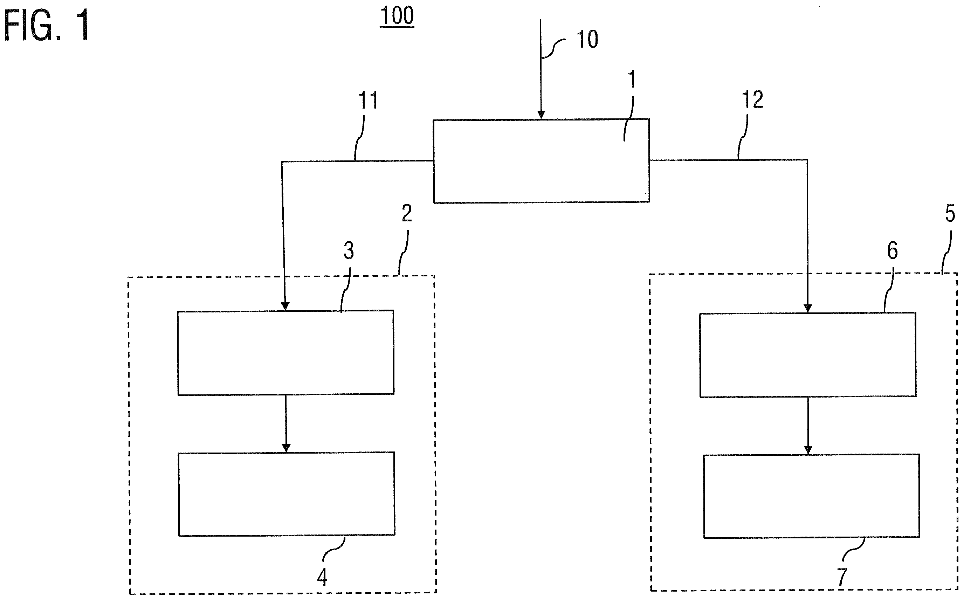

Figur 1 zeigt ein schematisches Blockdiagramm eines Dauerbremssystems 100 eines Nutzfahrzeugs und einer Vorrichtung 1 zur Steuerung des Dauerbremssystems 100. Das Dauerbremssystem 100 umfasst dabei in an sich bekannter Weise eine primäre Dauerbremse 2 und eine sekundäre Dauerbremse 5.

Die primäre Dauerbremse 2 umfasst beispielsweise in an sich bekannter Weise eine Kombination 4 aus einer Motorstaubremse und einer Dekompressionsbremse als Dauerbremseinrichtung. Die Motorstaubremse regelt über eine Veränderung eines Anstellwinkels einer Motorstauklappe (sog. Auspuffklappe) einen Abgasgegendruck und damit die Motorbremsleistung. Mittels der Dekompressionsbremse kann die Motorbremswirkung durch das kurzzeitige Öffnen der Auslassventile des Zylinders gesteigert werden.

Bei kleinen Dauerbremsmomentvorgaben wird bei dieser Ausführungsvariante nur die Motorbremswirkung durch den Abgasgegendruck genutzt. Bei einer weiteren Erhöhung wird der zusätzliche Effekt durch die Dekompressionsbremse genutzt. Die Dekompressionsbremse kann in an sich bekannter Weise gasgesteuert über den erhöhten Abgasgegendruck bei zumindest teilweise geschlossener Bremsklappe initiiert werden, bei dem gezielt ein "Ventilspringen" der Auslassventile ausgelöst wird (siehe z. B. EP 2 143 894 A1 oder EP 2 143 896 A1 für beispielhafte Implementierungen).

Die primäre Dauerbremse weist ferner einen Regler 3 auf, der in Abhängigkeit von einer Bremsanforderung 11 die Bremseinrichtung 4 der primären Dauerbremse 2 so ansteuert, dass ein Dauerbremsmoment in Höhe der angeforderten Bremsanforderung 11 erzeugt wird. Der Regler kann beispielsweise den Druck im Abgastrakt durch entsprechende Steuerorgane, z. B. durch eine Drosselklappe, regeln.

Die sekundäre Dauerbremse 5 kann einen Sekundärretarder 7 und einen Regler 6 aufweisen, der den Betrieb und das Bremsmoment des Sekundärretarders 7 regelt. Der Sekundärretarder 7 kann z. B. ein hydrodynamischer Retarder sein, bei dem die Menge des einströmenden Öls über ein druckluftbetätigtes Steuerventil geregelt wird.

Das Dauerbremssystem 100 umfasst ferner eine Steuervorrichtung 1, die eingerichtet ist, eine Dauerbremsen-Bremsanforderung 10 zu erfassen und diese in einen ersten Anteil 11 und in einen zweiten Anteil 12 aufzuteilen. Der erste Anteil 11 wird an den Regler 3 der primären Dauerbremse 2 weitergeleitet, und der zweite Anteil 12 wird an den Regler 6 der sekundären Dauerbremse 5 übermittelt.

Die Steuervorrichtung 1 kann als integraler Bestandteil einer anderen Steuerung, beispielsweise einer zentralen Steuereinheit, oder als eigenständige Steuereinheit ausgeführt sein. Unter dem Erfassen der Dauerbremsen-Bremsanforderung 10 wird insbesondere jeder Vorgang verstanden, bei dem eine Information erfasst wird, aufgrund derer von der Steuervorrichtung 1 ein Verzögern des Fahrzeugs unter Verwendung des Dauerbremssystems 100 einzuleiten ist. Es ist dabei möglich, nicht aber notwendig, dass die Dauerbremsen-Bremsanforderung 10 von einem Fahrerassistenzsystem wie einem Fahrzeuglängsregelsystem (Tempopilot oder Bremsomat) ausgelöst wird oder manuell durch einen Fahrer durch eine Eingabevorrichtung eingestellt wird.

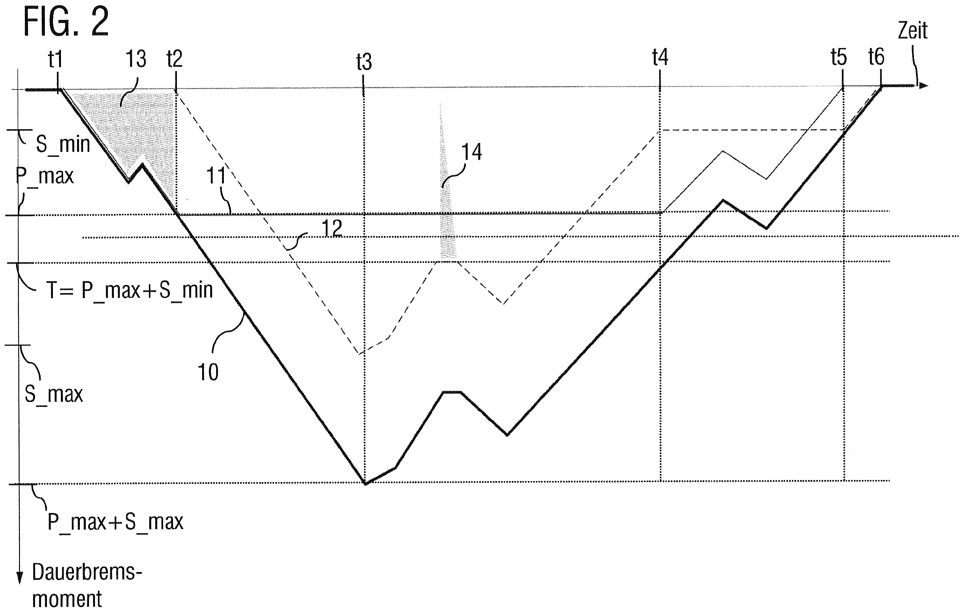

Die Funktionsweise der Steuervorrichtung 1 sowie ein Betriebsverfahren für das Dauerbremssystem werden nachfolgend anhand von Figur 2 erläutert. Hierbei entspricht die Abszissenachse der Zeitachse; die Ordinatenachse gibt die Höhe eines angeforderten Bremsmoments von der Dauerbremse an (Bremsmomentanforderung) an. Figur 2 illustriert den zeitlichen Verlauf einer Dauerbremsen-Bremsanforderung 10. Ferner zeigt Figur 2 den zeitlichen Verlauf des von der Steuervorrichtung 1 erzeugten bestimmten Anteils 11, der an die primäre Dauerbremse 2 übermittelt wird, was in Figur 2 durch die mit dem Bezugszeichen 11 gekennzeichnete Kurve dargestellt ist. Der zeitliche Verlauf des von der Steuervorrichtung 1 bestimmten zweiten Anteils 12 der Dauerbremsen-Bremsanforderung 10, der an die sekundäre Dauerbremse 5 übermittelt wird, ist in Figur 2 durch die mit dem Bezugszeichen 12 gekennzeichnete gestrichelte Kurve dargestellt.

In der Betriebsphase vor dem Zeitpunkt t1 wird kein Dauerbremsmoment angefordert. Es herrscht kein Dauerbremsbetrieb. Der erste Anteil 11 und der zweite Anteil 12 sind jeweils null. Zum Zeitpunkt t1 wird dann ein Dauerbremsbetrieb aufgrund eines Anstiegs der Dauerbremsen-Bremsanforderung 10 aktiviert und kann beispielsweise durch ein Fahrerlängsregelsystem bei Einfahrt in eine längere Gefällestrecke erzeugt werden.

In Figur 2 entspricht der Schwellenwert P_max (auch als erster Schwellenwert bezeichnet) einem maximal von der Bremseinrichtung 4 der primären Dauerbremse 2 erzeugbaren Bremsmoment. Da das von der primären Dauerbremse erzeugbare Bremsmoment von der aktuellen Motordrehzahl abhängt, ist der Schwellenwert P_max entsprechend ebenfalls motordrehzahlabhängig und wird fortlaufend in Abhängigkeit von der aktuellen Motordrehzahl neu berechnet.

Solange die Größe der Bremsanforderung 10 unterhalb des momentanen Schwellenwerts P_max liegt, was im Zeitraum von t1 bis t2 der Fall ist, gibt die Steuervorrichtung 1 die erfasste Bremsanforderung 10 in voller Höhe in Form der ersten Bremsanforderung 11 an die primäre Dauerbremse 2 weiter. Im Zeitraum t1 bis t2 wird die Bremsanforderung 10 somit komplett von der primären Dauerbremse 2 aufgebracht. Der Sekundärretarder ist deaktiviert, d. h. trägt aktuell kein Bremsmoment bei. Dies bietet ferner den Vorteil, dass ein vergleichsweise kleiner Wärmeeintrag ins Kühlsystem des Fahrzeugs erfolgt, da der Wärmeeintrag der primären Dauerbremse ins Motorkühlsystem des Nutzfahrzeugs im Vergleich zum Sekundärretarder gering ist. Der Wärmeeintrag zwischen t1 und t2 korreliert mit der Fläche 13.

Wenn die Bremsanforderung 10 den ersten Schwellenwert P_max erstmalig im Zeitpunkt t2 überschreitet, d. h. erstmalig nach der im Zeitpunkt t1 zuletzt erfolgten Aktivierung des Dauerbremsbetriebs, wird die sekundäre Dauerbremse 5, insbesondere der Sekundärretarder 7, aktiviert, die das restliche Bremsmoment ausregelt, d. h. einen den Schwellenwert P_max übersteigenden Anteil der Bremsanforderung 10.

Im vorliegenden Beispiel steigt die Bremsanforderung 10 von t2 bis t3 kontinuierlich bis auf einen Wert an, der einer Summe aus P_max und S_max entspricht, wobei S_max einem maximal vom Sekundärretarder 7 erzeugbaren Bremsmoment entspricht. Anschließend verringert sich die Bremsanforderung 10 wieder und erreicht im Zeitpunkt t4 einen Schwellenwert S_min. Während dieser Zeit wird der erste Anteil 11 auf dem Wert P_max konstant gehalten, und die Differenz zur Bremsanforderung 10 entspricht dem zweiten Anteil 12. Die sekundäre Dauerbremse 5 wird somit genutzt, um Schwankungen der Dauerbremsen-Bremsanforderung 10 auszuregeln.

Diese Ausregelung durch den Sekundärretarder erfolgt zumindest, wenn und solange die Dauerbremsen-Bremsanforderung größer gleich einem dritten Schwellenwert T ist, der einer Summe aus dem ersten Schwellenwert P_max und einem zweiten Schwellenwert S_min>0 entspricht. Hierbei wird ausgenutzt, dass eine sekundäre Dauerbremse, insbesondere in Form eines Sekundärretarders, schnell und fein regelbar arbeitet. Zugleich soll aber ein zu häufiges Ein- und Ausschalten des Sekundärretarders 7 verhindert werden. Dies wird dadurch realisiert, indem die sekundäre Dauerbremse 5, nachdem diese erstmals aktiviert wurde, nicht ganz auf null heruntergeregelt wird, solange das angeforderte Bremsmoment 10 größer null ist. Dadurch können Ein- und Ausschaltvorgänge des Sekundärretarders 7 reduziert werden und damit die Anzahl unkomfortabler Einschaltstöße. Vorliegend wird somit dann, wenn die Dauerbremsen-Bremsanforderung 10 von einem Wert oberhalb des dritten Schwellenwerts T kommend diesen dritten Schwellenwert T unterschreitet, der zweite Anteil 12 auf einen konstanten kleinen Wert S_min (zweiter Schwellenwert S_min) festgelegt und der erste Anteil 11 auf die Differenz von Dauerbremsen-Bremsanforderung 10 und zweitem Schwellenwert S_min festgelegt. Auf diese Weise kann der geringere Wärmeeintrag der primären Dauerbremse ausgenutzt werden und ein Einschaltvorgang des Sekundärretarders 7 vermieden werden.

Im Zeitraum zwischen t4 und t5 erfolgt eine Schwankung der Bremsanforderung 10, die jedoch unterhalb des dritten Schwellenwerts T liegt. Hierbei bleibt der zweite Anteil 12 konstant auf dem Wert S_min, und der erste Anteil 11 wird demzufolge entsprecht variiert, um die Schwankungen des Bremsanforderung 10 auszugleichen. Bei dieser Variante wird somit der Bremsmomentanteil der sekundären Dauerbremse konstant auf einem kleinem Wert gehalten und Schwankungen der Bremsanforderung unterhalb des dritten Schwellenwerts T von der primären Dauerbremse 2 ausgeregelt, um auf diese Weise einen möglichst geringen Eintrag in das Motorkühlsystem zu erzeugen. Im Bereich 14 wird ein Wärmeeintrag durch den kleinen Bremsmomentanteil des Sekundärretarders 7 verringert.

Im Zeitpunkt t5 sinkt die Bremsanforderung 10 unter den Schwellenwert S_min ab. Um einen Ausschaltvorgang des Sekundärretarders möglichst lange hinauszuzögern, wird entsprechend zuerst die primäre Dauerbremse 2 deaktiviert, d. h., der erste Anteil 11 sinkt auf null. Erst wenn die Dauerbremsanforderung 10 weiter bis auf null sinkt, wird auch der zweite Anteil 12 im Zeitpunkt t6 auf null reduziert.

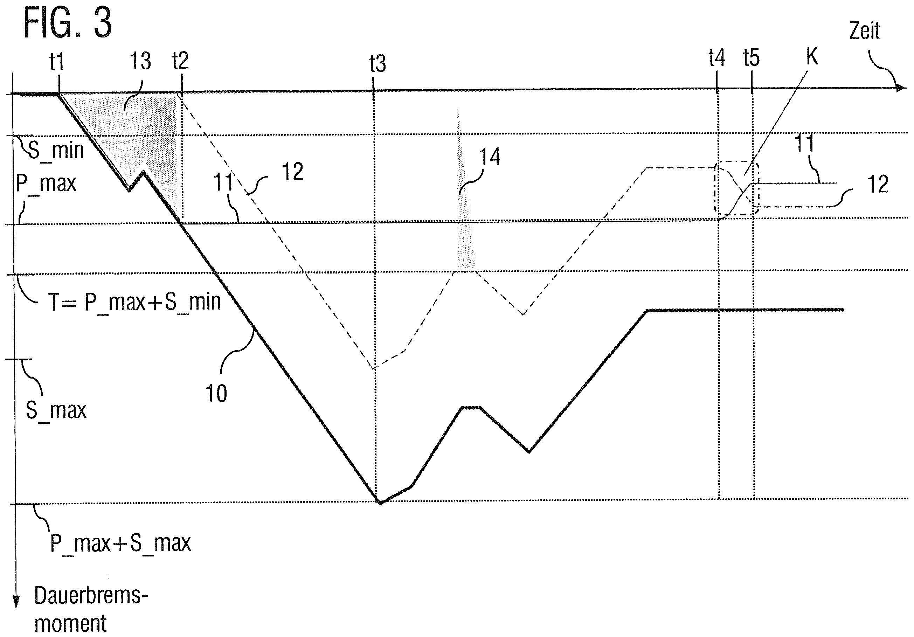

Figur 3 zeigt ein Zeitdiagram zur Illustration des Zusammenwirkens der primären und sekundären Dauerbremse gemäß einer weiteren Ausführungsform der Erfindung. Bis zum Zeitpunkt t4 entspricht das gezeigte Zusammenwirken der primären und sekundären Dauerbremse dem in Figur 2 beschriebenen Zusammenwirken.

Im Zeitpunkt t4 verliert die primäre Dauerbremse 2, beispielsweise aufgrund einer temporären Fehlfunktion, jedoch einen Teil ihres Bremsmoments, so dass die primäre Dauerbremse nicht mehr den von ihr bisher angeforderten ersten Anteil der Höhe P_max aufbringen kann. Die Steuervorrichtung 1 ist eingerichtet, eine Abweichung eines tatsächlich von einer Dauerbremse aufgebrachten Bremsmomentanteils zu dem von der jeweiligen Dauerbremse zuvor angeforderten Bremsmomentanteil festzustellen. Bei einem festgestellten unerwünschten Rückgang des von der primären Dauerbremse 2 erzeugten Bremsmomentanteils wird nachfolgend der von der primären Dauerbremse 2 angeforderte Anteil 11 durch die Steuervorrichtung 1 verringert und entsprechend hierzu der von der sekundären Dauerbremse 5 angeforderte Anteil 12 um den gleichen Betrag erhöht. Dadurch wird das weggefallene Moment durch die sekundäre Dauerbremse 5 zusätzlich aufgebracht und dadurch kompensiert. Die insgesamt erzeugte Dauerbremsmoment bleibt konstant. Dies ist durch den Verlauf der Anteile 11 und 12 im Kompensationsbereich K, gekennzeichnet durch die punkt-gestrichelte Linie K, dargestellt. Entsprechend kann ein Verlust eines Bremsmomentanteil der sekundären Dauerbremse durch die primäre Dauerbremse kompensiert werden. Selbstverständlich kann ein Verlust eines Bremsmomentanteils einer der Dauerbremsen durch die andere Dauerbremse nur dann kompensiert werden, wenn die andere Dauerbremse zu diesem Betriebszeitpunkt noch ausreichend weit unterhalb von ihrem maximal erzeugbaren Dauerbremsmoment betrieben wird.

Gemäß einem weiteren Aspekt kann das Betriebsverfahren so ausgeführt sein, dass, wenn während eines Dauerbremsbetriebs die erste Dauerbremse oder die zweite Dauerbremse zumindest einen Teil ihres erzeugbaren Bremsmoments verliert, so dass das erzeugte Bremsmoment unter den von der jeweiligen Dauerbremse angeforderten Anteil des Dauerbremsmoments fällt, das weggefallene Bremsmoment durch die andere Dauerbremse substituiert wird. Dies bietet den Vorteil, dass auf eine Fehlfunktion einer der Dauerbremsen reagiert werden kann, indem die andere Dauerbremse kurzfristig das verlorenen Bremsmoment der anderen Dauerbremse zusätzlich aufbringt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Steuervorrichtung
- 2: Primäre Dauerbremse
- 3: Regler der primären Dauerbremse
- 4: Bremseinrichtung der primären Dauerbremse
- 5: Sekundäre Dauerbremse
- 6: Regler der sekundären Dauerbremse
- 7: Sekundärretarder
- 10: Dauerbremsen-Bremsanforderung
- 11: Erster Anteil
- 12: Zweiter Anteil
- 13: Fläche korrelierend zum Wärmeeintrag
- 14: Lokales Minimum des Wärmeeintrags durch den Sekundärretarder
- P_max: Maximales von der primären Dauerbremse erzeugbares Bremsmoment
- S_max: Maximales vom Sekundärretarder erzeugbares Bremsmoment
- S_min: Zweiter Schwellenwert
- T: Dritter Schwellenwert
- K: Kompensationsbereich

## Patentansprüche

1. Betriebsverfahren für ein Dauerbremssystem (100) eines Kraftfahrzeugs, insbesondere eines Nutzfahrzeugs, wobei das Dauerbremssystem (100) eine regelbare primäre Dauerbremse (2) und eine regelbare sekundäre Dauerbremse (5) aufweist, wobei die primäre Dauerbremse
a) eine Motorstaubremse zum Aufbau eines Abgasgegendrucks und/oder eine Dekompressionsbremse umfasst und
b) keine weitere Bremseinrichtung aufweist, die im Vergleich zu der Motorstaubremse und/oder der Dekompressionsbremse ein langsameres Ansprechverhalten aufweist; und/oder die ausgebildet ist, zusätzlich zu der Motorstaubremse und/oder der Dekompressionsbremse ein Dauerbremsmoment über eine Veränderung eines Ladedrucks einer aufgeladenen Brennkraftmaschine zu erzeugen;
wobei nach Aktivierung eines Dauerbremsbetriebs und bis eine Dauerbremsen-Bremsanforderung (10) nach Aktivierung des Dauerbremsbetriebs einen ersten Schwellenwert (P_max) erstmalig überschreitet, die Dauerbremsen-Bremsanforderung (10) von der primären Dauerbremse (2) aufgebracht wird, wobei der erste Schwellenwert (P_max) so festgelegt ist, dass er einem Wert entspricht, der kleiner oder gleich einem maximal von der primären Dauerbremse (2) erzeugbaren Bremsmoment ist; und
wobei bei erstmaligem Überschreiten des ersten Schwellenwertes durch die Dauerbremsen-Bremsanforderung nach Aktivierung eines Dauerbremsbetriebs die sekundäre Dauerbremse (5) aktiviert wird.

2. Betriebsverfahren nach Anspruch 1, wobei bei einer nachfolgenden Verringerung der Dauerbremsen-Bremsanforderung ein von der sekundären Dauerbremse angeforderter Bremsanteil nicht auf null abgesenkt wird, solange die Dauerbremsen-Bremsanforderung größer null ist.

3. Betriebsverfahren nach Anspruch 1 oder 2, wobei
a) bei erstmaligem Überschreiten des ersten Schwellenwertes (P_max) durch die Dauerbremsen-Bremsanforderung (10) nach Aktivierung eines Dauerbremsbetriebs die Dauerbremsen-Bremsanforderung in einen ersten Anteil (11), der von der primären Dauerbremse (2) angefordert wird, und in einen zweiten Anteil (12), der von der sekundären Dauerbremse (5) angefordert wird, aufgeteilt wird; und
b) der erste Anteil (11) auf einen Wert des ersten Schwellenwerts (P_max) und der zweite Anteil (12) auf einen Wert der Differenz von Dauerbremsen-Bremsanforderung (10) und erstem Schwellenwert (P_max) festgelegt wird, wenn und solange die Dauerbremsen-Bremsanforderung größer gleich einem dritten Schwellenwert (T) ist, der eine Summe aus dem ersten Schwellenwert (P_max) und einem zweiten Schwellenwert (S_min) ist.

4. Betriebsverfahren nach Anspruch 3, wobei,
wenn eine Dauerbremsen-Bremsanforderung (10) von einem Wert oberhalb des dritten Schwellenwerts (T) kommend diesen dritten Schwellenwert (T) unterschreitet, der zweite Anteil (12) auf einen konstanten Wert des zweiten Schwellenwerts (S_min) und der erste Anteil (11) auf die Differenz von Dauerbremsen-Bremsanforderung (10) und zweitem Schwellenwert (S_min) festgelegt wird, solange die Dauerbremsen-Bremsanforderung (10) kleiner als der dritte Schwellenwert (T) und größer gleich dem zweiten Schwellenwert (S_min) ist.

5. Betriebsverfahren nach Anspruch 4, wobei,
wenn eine Dauerbremsen-Bremsanforderung (10) nach einer Überschreitung des dritten Schwellenwerts (T) anschließend wieder unter den zweiten Schwellenwert (S_min) fällt, der erste Anteil (11) auf null und der zweite Anteil (12) auf die Dauerbremsen-Bremsanforderung (10) festgelegt wird.

6. Betriebsverfahren nach einem der vorhergehenden Ansprüche, wobei
a) der erste Schwellenwert (P_max) auf einen Wert festgelegt ist, der einem maximal von der primären Dauerbremse (2) erzeugbaren Dauerbremsmoment entspricht; und/oder
b) der zweite Schwellenwert (S_min) auf einen Wert festgelegt ist, der mindestens einem minimalen, von der sekundären Dauerbremse (5) im aktivierten Zustand erzeugbaren Dauerbremsmoment entspricht.

7. Betriebsverfahren nach einem der vorhergehenden Ansprüche, wobei, wenn während eines Dauerbremsbetriebs die erste Dauerbremse oder die zweite Dauerbremse zumindest einen Teil ihres erzeugbaren Bremsmoments verliert, so dass das erzeugte Bremsmoment unter den von der jeweiligen Dauerbremse angeforderten Anteil des Dauerbremsmoments fällt, das weggefallene Bremsmoment durch die andere Dauerbremse substituiert wird.

8. Betriebsverfahren nach einem der vorhergehenden Ansprüche, wobei die sekundäre Dauerbremse (5) ein Sekundärretarder ist.

9. Vorrichtung (1) zur Steuerung oder Regelung eines Dauerbremssystems (100) eines Kraftfahrzeugs,
a) wobei das Dauerbremssystem eine primäre Dauerbremse (2) und eine sekundäre Dauerbremse (5), vorzugsweise einen Sekundärretarder, aufweist; und wobei die primäre Dauerbremse eine Motorstaubremse zum Aufbau eines Abgasgegendrucks und/oder eine Dekompressionsbremse umfasst und keine weitere Bremseinrichtung aufweist, die im Vergleich zu der Motorstaubremse und/oder der Dekompressionsbremse ein langsameres Ansprechverhalten aufweist; und/oder die ausgebildet ist, zusätzlich zu der Motorstaubremse und/oder der Dekompressionsbremse ein Dauerbremsmoment über eine Veränderung eines Ladedrucks einer aufgeladenen Brennkraftmaschine zu erzeugen; und
b) die Vorrichtung (1) ausgebildet ist, eine Dauerbremsen-Bremsanforderung (10) in einen ersten Anteil (11), der von der primären Dauerbremse (2) angefordert wird, und in einen zweiten Anteil (12), der von der sekundären Dauerbremse (5) angefordert wird, aufzuteilen,
**dadurch gekennzeichnet, dass** die Vorrichtung (1) ausgebildet ist, das Betriebsverfahren gemäß einem der vorhergehenden Ansprüche durchzuführen.

10. Nutzfahrzeug, mit einer Vorrichtung (1) nach Anspruch 9.

## Claims

1. Operating method for a continuous braking system (100) of a motor vehicle, in particular of a utility vehicle, wherein the continuous braking system (100) comprises a controllable primary continuous brake (2) and a controllable secondary continuous brake (5), wherein the primary continuous brake
a) comprises an engine exhaust brake for building up an exhaust gas backpressure and/or a compression release brake and
b) does not comprise any further braking device which compared with the engine exhaust brake and/or the compression release brake has a slower response behaviour; and/or which is designed, in addition to the engine exhaust brake and/or the compression release brake, to generate a continuous braking torque by way of changing a charge pressure of a supercharged internal combustion engine;
wherein following activation of a continuous braking operation and until a continuous-brakes braking request (10) following activation of the continuous braking operation exceeds a first threshold value (P_max) for the first time, the continuous-brakes braking request (10) is produced by the primary continuous brake (2), wherein the first threshold value (P_max) is fixed so that it corresponds to a value that is smaller or equal to a braking torque that is maximally generatable by the primary continuous brake (2); and wherein when the first threshold value is exceeded by the continuous-brakes braking request for the first time following activation of a continuous braking operation the secondary continuous brake (5) is activated.

2. Operating method according to Claim 1, wherein upon a subsequent reduction of the continuous-brakes braking request a braking component requested from the secondary continuous brake is not lowered to zero for as long as the continuous-brakes braking request is greater than zero.

3. Operating method according to Claim 1 or 2, wherein
a) when the first threshold value (P_max) is exceeded by the continuous-brakes braking request (10) for the first time the continuous-brakes braking request, following activation of a continuous braking mode, is divided into a first component (11), which is requested from the primary continuous brake (2), and into a second component (12), which is requested from the secondary continuous brake (5); and
b) the first component (11) is fixed to a value of the first threshold value (P_max) and the second component (12) to a value of the difference of continuous-brakes braking request (10) and first threshold value (P_max), when and for as long as the continuous-brakes braking request is greater than or equal to a third threshold value (T) which is a sum of the first threshold value (P_max) and a second threshold value (S_min).

4. Operating method according to Claim 3, wherein when a continuous-brakes braking request (10), coming from a value above the third threshold value (T), falls below this third threshold value (T), the second component (12) is fixed to a constant value of the second threshold value (S_min) and the first component (11) to the difference of continuous-brakes braking request (10) and second threshold value (S_min) for as long as the continuous-brakes braking request (10) is smaller than the third threshold value (T) and greater than or equal to the second threshold value (S_min).

5. Operating method according to Claim 4, wherein when a continuous-brakes braking request (10), following an exceeding of the third threshold value (T), subsequently falls again below the second threshold value (S_min), the first component (11) is fixed to zero and the second component (12) to the continuous-brakes braking request (10).

6. Operating method according to any one of the preceding claims, wherein
a) the first threshold value (P_max) is fixed to a value which corresponds to a continuous braking torque that is maximally generatable by the primary continuous brake (2); and/or
b) the second threshold value (S_min) is fixed to a value which at least corresponds to a minimal continuous braking torque that is generatable by the secondary continuous brake (5) in the activated state.

7. Operating method according to any one of the preceding claims, wherein when, during a continuous braking operation, the first continuous brake or the second continuous brake loses at least one part of its generatable braking torque so that the generated braking torque falls below the component of the continuous braking torque requested from the respective continuous brake, the braking torque that has fallen away is substituted by the other continuous brake.

8. Operating method according to any one of the preceding claims, wherein the secondary continuous brake (5) is a secondary retarder.

9. Device (1) for open-loop or closed-loop controlling of a continuous braking system (100) of a motor vehicle,
a) wherein the continuous braking system comprises a primary continuous brake (2) and a secondary continuous brake (5), preferentially a secondary retarder; and wherein the primary continuous brake comprises an engine exhaust brake for building up an exhaust gas backpressure and/or a compression release brake and does not comprise any further braking device which compared with the engine exhaust brake and/or the compression release brake has a slower response behaviour; and/or which is designed, in addition to the engine exhaust brake and/or the compression release brake, to generate a continuous braking torque by way of changing a charge pressure of a supercharged internal combustion engine; and
b) the device (1) is designed to divide a continuous-brakes braking request (10) into a first component (11), which is requested from the primary continuous brake (2), and into a second component (12), which is requested from the secondary continuous brake (5),
**characterized in that** the device (1) is designed in order to carry out the operating method according to any one of the preceding claims.

10. Utility vehicle with a device (1) according to Claim 9.

## Revendications

1. Procédé de fonctionnement d'un système de freinage continu (100) d'un véhicule automobile, en particulier d'un véhicule utilitaire, dans lequel le système de freinage continu (100) présente un frein continu primaire réglable (2) et un frein continu secondaire réglable (5), le frein continu primaire
a) comprenant un frein moteur sur échappement pour la création d'une contre-pression de gaz d'échappement et/ou un frein à décompression, et
b) ne présentant pas de dispositif de freinage supplémentaire qui présente, par comparaison avec le frein moteur sur échappement et/ou le frein à décompression, un comportement de réaction plus lent ; et/ou qui est réalisé, en plus du frein moteur sur échappement et/ou du frein à décompression, pour générer un couple de freinage continu par le biais d'une modification de la pression de suralimentation d'un moteur à combustion interne à suralimentation ;
dans lequel, après l'activation d'un mode de freinage continu et jusqu'au dépassement pour la première fois, par une demande de freinage en frein continu (10), d'une première valeur de seuil (P_max), après l'activation du mode de freinage continu, la demande de freinage en frein continu (10) est appliquée par le frein continu primaire (2), la première valeur de seuil (P_max) étant fixée de telle sorte qu'elle corresponde à une valeur qui est inférieure ou égale à un couple de freinage pouvant être généré au maximum par le frein continu primaire (2) ; et
dans lequel, en cas de dépassement pour la première fois de la première valeur de seuil par la demande de freinage en frein continu (10) après l'activation d'un mode de freinage continu, le frein continu secondaire (5) est activé.

2. Procédé de fonctionnement selon la revendication 1, dans lequel, dans le cas d'une réduction subséquente de la demande de freinage en frein continu, une proportion du freinage exigée par le frein continu secondaire n'est pas réduite à zéro tant que la demande de freinage en frein continu est supérieure à zéro.

3. Procédé de fonctionnement selon la revendication 1 ou 2, dans lequel
a) lors du dépassement pour la première fois de la première valeur de seuil (P_max) par la demande de freinage en frein continu (10) après l'activation d'un mode de freinage continu, la demande de freinage en frein continu est divisée en une première proportion (11) qui est exigée par le frein continu primaire (2) et en une deuxième proportion (12) qui est exigée par le frein continu secondaire (5) ; et
b) la première proportion (11) est fixée à une valeur de la première valeur de seuil (P_max) et la deuxième proportion (12) est fixée à une valeur de la différence de la demande de freinage en frein continu (10) et de la première valeur de seuil (P_max), si et tant que la demande de freinage en frein continu est supérieure ou égale à une troisième valeur de seuil (T) qui est une somme de la première valeur de seuil (P_max) et d'une deuxième valeur de seuil (S_min).

4. Procédé de fonctionnement selon la revendication 3, dans lequel
lorsqu'une demande de freinage en frein continu (10), partant d'une valeur au-dessus de la troisième valeur de seuil (T), passe en dessous de cette troisième valeur de seuil (T), la deuxième proportion (12) est fixée à une valeur constante de la deuxième valeur de seuil (S_min) et la première proportion (11) est fixée à la différence de la demande de freinage en frein continu (10) et de la deuxième valeur de seuil (S_min), tant que la demande de freinage en frein continu (10) est inférieure à la troisième valeur de seuil (T) et est supérieure ou égale à la deuxième valeur de seuil (S_min).

5. Procédé de fonctionnement selon la revendication 4, dans lequel
lorsqu'une demande de freinage en frein continu (10), après un dépassement de la troisième valeur de seuil (T) tombe ensuite à nouveau en dessous de la deuxième valeur de seuil (S_min), la première proportion (11) est fixée à zéro et la deuxième proportion (12) est fixée à la demande de freinage en frein continu (10).

6. Procédé de fonctionnement selon l'une quelconque des revendications précédentes, dans lequel
a) la première valeur de seuil (P_max) est fixée à une valeur qui correspond à un couple de freinage continu pouvant être généré au maximum par le frein continu primaire (2) ; et/ou
b) la deuxième valeur de seuil (S_min) est fixée à une valeur qui correspond au moins à un couple de freinage continu pouvant être généré au minimum par le frein continu secondaire (5) dans l'état activé.

7. Procédé de fonctionnement selon l'une quelconque des revendications précédentes, dans lequel, si, pendant un mode de freinage continu, le premier frein continu ou le deuxième frein continu perd au moins une partie de son couple de freinage pouvant être généré, de telle sorte que le couple de freinage généré tombe en dessous de la proportion du couple de freinage continu exigée par le frein continu respectif, le couple de freinage ayant disparu est substitué par l'autre frein continu.

8. Procédé de fonctionnement selon l'une quelconque des revendications précédentes, dans lequel le frein continu secondaire (5) est un ralentisseur secondaire.

9. Dispositif (1) pour la commande ou le réglage d'un système de freinage continu (100) d'un véhicule automobile
a) dans lequel le système de freinage continu présente un frein continu primaire (2) et un frein continu secondaire (5), de préférence un ralentisseur secondaire ; et dans lequel le frein continu primaire présente un frein moteur sur échappement pour la création d'une contre-pression de gaz d'échappement et/ou un frein à décompression, et ne présente pas de dispositif de freinage supplémentaire qui présente, par comparaison avec le frein moteur sur échappement et/ou le frein à décompression, un comportement de réaction plus lent ; et/ou qui est réalisé, en plus du frein moteur sur échappement et/ou du frein à décompression, pour générer un couple de freinage continu par le biais d'une modification de la pression de suralimentation d'un moteur à combustion interne à suralimentation ; et
b) dans lequel le dispositif (1) est réalisé de manière à diviser une demande de freinage en frein continu (10) en une première proportion (11) qui est exigée par le frein continu primaire (2) et en une deuxième proportion (12) qui est exigée par le frein continu secondaire (5),
**caractérisé en ce que** le dispositif (1) est réalisé de manière à mettre en oeuvre le procédé de fonctionnement selon l'une quelconque des revendications précédentes.

10. Véhicule utilitaire comprenant un dispositif (1) selon la revendication 9.
